# EUROPÄISCHE PATENTANMELDUNG

(11) **EP 2 439 834 A2**
(43) Veröffentlichungstag der Anmeldung: **11.04.2012**
(21) Anmeldenummer: 11180593.3
(22) Anmeldetag: 08.09.2011
(51) Int. Cl.: H02K 7/116

(54) **Getriebegehäuse, Motorgetriebeanordnung und Scheibenwischerantrieb**

(30) Priorität: 07.10.2010 DE 102010042097
(71) Anmelder: Robert Bosch GmbH, 70469 Stuttgart (DE)
(72) Erfinder: Reith, Michael, 77815 Buehl-Vimbuch (DE); Albrecht, Gerard, 67690 Hatten (FR)

(57) **Zusammenfassung**

Die Offenbarung betrifft ein Getriebegehäuse zur Aufnahme eines Getriebes, an das ein elektrisch leitendes Polgehäuse eines Elektromotors anschließbar ist, wobei der Elektromotor eingerichtet ist, das Getriebe anzutreiben, wobei das Getriebegehäuse eine erste Öffnung, um einer Welle des Elektromotors Zugang zu dem durch die Welle anzutreibenden Getriebe zu ermöglichen, und eine zweite Öffnung aufweist, die Zugang zu einem in dem Getriebegehäuse anordnenbaren Getriebe ermöglicht und die mit einem elektrisch leitenden Getriebedeckel verschließbar ist, wobei das Getriebegehäuse mindestens eine erste Aussparung, durch die ein Befestigungsmittel zum Befestigen des Polgehäuses an dem Getriebegehäuse einführbar ist, und mindestens eine zweite Aussparung aufweist, die mit mindestens einer ersten Aussparung abschnittsweise über einen Verbindungsabschnitt derart verbunden ist, so dass ein Abschnitt eines Getriebedeckels in Kontakt mit dem in der ersten Aussparung angeordneten Befestigungsmittel bringbar ist. Ferner betrifft die vorliegende Offenbarung eine Motorgetriebeanordnung und einen Scheibenwischerantrieb.

## Beschreibung

### Stand der Technik

Die Erfindung betrifft ein Getriebegehäuse zur Aufnahme eines Getriebes, an das ein elektrisch leitendes Polgehäuse eines Elektromotors anschließbar ist, eine Motorgetriebeanordnung und einen Scheibenwischerantrieb.

Bei gattungsgemäßen Getriebegehäusen beziehungsweise Motorgetriebeanordnungen für Scheibenwischeranlagen, die ein Polgehäuse eine elektrische Verbindung zwischen einem Polgehäuse eines Elektromotors mit metallischen Teilen eines Getriebegehäuses, beispielsweise einem Deckel eines Getriebegehäuse ein Masseband oder Massekabel verwendet, um ein Kunststoff-Getriebegehäuse zu überbrücken.

Eine solche Anordnung erfordert eine aufwändige Montage, insbesondere muss das Masseband oder das Massekabel sowohl an dem Polgehäuse als auch an dem Blechdeckel des Polgehäuses befestigt werden. Das erfordert zusätzliche Materialien, beispielsweise in Form des Massebands, und einen aufwändigen Montageprozess durch Arbeitsschritte, um die Materialien an dem Polgehäuse und dem Getriebegehäuse oder dem Deckel des Getriebegehäuses zu befestigen.

### Vorteile der Erfindung

Aufgabe der Erfindung ist es daher, ein Polgehäuse und eine Motorgetriebeanordnung bereitzustellen, die die Nachteile des Stands der Technik überwindet, insbesondere eine einfache Montage und eine zuverlässige elektrische Verbindung zwischen dem Deckel eines Getriebegehäuses und einem Polgehäuse ermöglicht.

Diese Aufgabe wird durch ein Getriebegehäuse gemäß Anspruch 1 gelöst, die ein Getriebegehäuse zur Aufnahme eines Getriebes bereitstellt, an das ein elektrisch leitendes Polgehäuse eines Elektromotors anschließbar ist, wobei der Elektromotor eingerichtet ist, das Getriebe anzutreiben, wobei das Getriebegehäuse eine erste Öffnung, um einer Welle des Elektromotors Zugang zu dem durch die Welle anzutreibenden Getriebe zu ermöglichen, und eine zweite Öffnung aufweist, die Zugang zu einem in dem Getriebegehäuse anordnenbaren Getriebe ermöglicht und die mit einem elektrisch leitenden Getriebedeckel verschließbar ist, wobei das Getriebegehäuse mindestens eine erste Aussparung, durch die ein Befestigungsmittel zum Befestigen des Polgehäuses oder des Getriebedeckels an dem Getriebegehäuse einführbar ist, und mindestens eine zweite Aussparung aufweist, die jeweils mit mindestens einer ersten Aussparung abschnittsweise über einen Verbindungsabschnitt derart verbunden ist, so dass ein Abschnitt eines Getriebedeckels in Kontakt mit dem in der ersten Aussparung angeordneten Befestigungsmittel zum Befestigen des Polgehäuses oder ein Abschnitt eines Polgehäuses mit dem in der ersten Aussparung angeordneten Befestigungsmittel zum Befestigen des Getriebedeckels bringbar ist.

Insbesondere ermöglicht die Erfindung den Entfall eines Massebandes oder Massekabels unter Verwendung keiner weiteren Bauteile oder Montageschritte in der Fertigungslinie. Insbesondere entfällt ein Montageschritt, sodass die Motorgetriebeanordnung und der daraus resultierende Scheibenwischerantrieb kostengünstiger hergestellt werden kann. Beispielsweise entfällt der Montageschritt der Befestigung des Massebandes and dem Deckel und dem Polgehäuse. Auch die Befestigungsmittel zur Befestigung des Massebandes können nun entfallen. Folglich ist eine Kostenersparnis durch Teilereduzierung und geringerer Montageaufwand in der Montagelinie durch den Gegenstand gemäß den Ausführungsformen der vorliegende Anmeldung ermöglicht. Ferner wird eine zuverlässige und/oder niederohmige Masseverbindung zum Potenzialausgleich zwischen Polgehäuse und Getriebedeckel erreicht.

Gemäß einer Ausführungsform, die mindestens eine zweite Aussparung auf der gleichen Gehäuseseite wie die zweite Öffnung angeordnet sein. Dies ermöglicht, den Getriebedeckel einfach auf das Getriebegehäuse zu legen und dort zu befestigen, ohne dass der Getriebedeckel verbogen oder an zwei Seiten des Getriebegehäuses ausgerichtet werden muss.

In einer Ausführungsform, die mit einer anderen offenbarten Ausführungsform kombiniert werden kann, ist die mindestens eine erste Aussparung auf der gleichen Gehäuseseite wie die erste Öffnung angeordnet. Dies ermöglicht, das Polgehäuse einfach auf das Getriebegehäuse zu legen und dort zu befestigen, ohne das dass Polgehäuse verbogen oder an zwei Seiten des Getriebegehäuses ausgerichtet werden muss.

Umgekehrt kann auch die mindestens eine erste Aussparung auf der gleichen Gehäuseseite wie die zweite Öffnung angeordnet sein und/oder die mindestens eine zweite Aussparung auf der gleichen Gehäuseseite wie die erste Öffnung angeordnet sein, insbesondere wenn die mindestens eine erste Aussparung zur Aufnahme eines Befestigungsmittels des Getriebedeckels dient.

Beispielsweise können die mindestens eine erste und die mindestens eine zweite Aussparung in im Wesentlichen senkrecht zueinander stehenden Seiten des Getriebegehäuses angeordnet sein. So können auch die erste und zweite Öffnung auf in im Wesentlichen senkrecht zueinander stehenden Seiten des Getriebegehäuses angeordnet sein.

Beispielsweise kann die mindestens eine erste Aussparung eine Längsachse aufweist und im Querschnitt der ersten Aussparung der Verbindungsabschnitt 5% bis 40 % des Umfangs, insbesondere 15 bis 35% des Umfangs des ersten Abschnitts entspricht. Die erste Aussparung kann beispielsweise im Wesentlichen zylinderförmig oder konisch zulaufend geformt sein. Dies vereinfacht ein Einbringen des Befestigungsmittels. Der Verbindungsabschnitt ist so groß gewählt, dass ein guter, das heißt niederohmiger, elektrischer Kontakt zwischen dem Befestigungsmittel und einem Abschnitt des Getriebedeckels bzw. des Polgehäuses ermöglicht wird.

Insbesondere kann die mindestens eine erste Aussparung derart gebildet werden, dass der Querschnitt der mindestens einen ersten Aussparung kreisförmig ist.

In einer Ausführungsform ist das Getriebegehäuse zumindest zwischen dem Abschnitt, an dem das Polgehäuse befestigt wird, und dem Abschnitt an dem der Getriebedeckel befestigt wird, insbesondere vollständig, elektrisch nicht leitend ist. Insbesondere kann das Getriebegehäuse zwischen der ersten Öffnung und der zweiten Öffnung elektrisch nicht leitend sein. Dies ermöglicht eine günstige Herstellung des Gehäuses aus einem nichtleitenden Material, beispielsweise Plastik.

In einer Ausführungsform kann das Getriebegehäuse für einen Scheibenwischerantrieb ausgelegt sein.

Ferner betrifft die Anmeldung eine Motorgetriebeanordnung umfassend ein Getriebegehäuse zur Aufnahme eines Getriebes, das durch den Elektromotor antreibbar ist, nach einem der vorangehenden Ansprüche, ein, insbesondere elektrisch leitender, Getriebedeckel das die zweite Öffnung des Getriebegehäuses schließt, und ein, insbesondere elektrisch leitendes, Polgehäuse eines Elektromotors, wobei das Polgehäuse an der ersten Öffnung befestigt ist. Gemäß einer Ausführungsform kann mindestens ein Befestigungsmittel, insbesondere eine Schraube, ein Bolzen, oder eine Niete, derart in der mindestens einen ersten Aussparung zur Befestigung des Polgehäuses oder des Getriebedeckels angeordnet sein, dass ein elektrischer Kontakt zwischen dem Befestigungsmittel und dem Polgehäuse bzw. dem Getriebedeckel ermöglicht ist. Beispielsweise kann die Schulter einer Schraube Vorsprünge oder Kanten aufweisen, um sich in das Material des Polgehäuses bzw. des Getriebedeckels einzugraben. In einer anderen Ausführungsform kann eine Unterlegscheibe zwischen der Schulter einer Schraube und dem Polgehäuse bzw. Getriebedeckel angeordnet sein, die entsprechende Kanten aufweist, um einen guten elektrischen Kontakt zwischen der Schraube und dem Polgehäuse bzw. dem Getriebedeckel zu ermöglichen.

In einer Ausführungsform, die mit anderen hier offenbarten Ausführungsformen kombiniert werden kann, kann der Getriebedeckel oder das Polgehäuse mindestens einen Abschnitt, insbesondere eine Lasche aufweisen, der derart in die mindestens eine zweite Aussparung eingreift, dass der mindestens eine Abschnitt zumindest abschnittsweise den Verbindungsabschnitt abdeckt, so dass mindestens ein sich in der mindestens einen ersten Aussparung befindliches Befestigungsmittel in elektrischem Kontakt mit dem Abschnitt steht. Folglich ist über das Befestigungsmittel und dem Abschnitt das Polgehäuse mit dem Getriebedeckel in elektrischer, insbesondere niederohmiger, Verbindung.

In einer Ausführungsform kann der mindestens eine Abschnitt in Richtung des Verbindungsabschnitts vorgespannt sein. Das ermöglicht eine besonders zuverlässige elektrische Verbindung zwischen dem Befestigungsmittel und dem Abschnitt des Getriebedeckels oder des Polgehäuses. Beispielsweise kann der Abschnitt des Getriebedeckels bzw. des Polgehäuses einen U-förmigen Bereich aufweisen, der in die mindestens eine zweite Aussparung eingeführt wird, insbesondere so dass sich der Knick des U-förmigen Bereichs angrenzend an einen Boden des mindestens einen zweiten Abschnitts angeordnet ist. So kann die Montage weiter vereinfacht werden, da der Getriebedeckel durch die Vorspannung auf dem Getriebegehäuse gehalten wird.

Ferner wird die Aufgabe durch einen Scheibenwischerantrieb mit einer Motorgetriebeanordnung nach einer in der vorliegenden Offenbarung beschriebenen Ausführungsform und/oder einer Getriebeanordnung nach einer in der vorliegenden Offenbarung beschriebenen Ausführungsform. Ein solcher Scheibenwischerantrieb kann besonders günstig und einfach hergestellt werden.

### Zeichnungen

Weitere Merkmale und Vorteile der Erfindung ergeben sich aus der nachstehenden Beschreibung, in der ein Ausführungsbeispiel der Erfindung anhand schematischer Zeichnungen im Einzelnen erläutert wird. Dabei zeigt:
- Fig. 1:: eine perspektivische Darstellung einer Motorgetriebeanordnung gemäß einer Ausführungsform
- Fig. 2:: einen Querschnitt senkrecht zur Auflageebene des Polgehäuses durch die Ausführungsform der Motorgetriebeanordnung gemäß Abbildung 1;
- Fig. 3:: einen Querschnitt gemäß der Ausführungsform der Motorgetriebeanordnung von Fig. 1 gemäß A-A von Fig. 2, und
- Fig. 4: eine Schraube zur Befestigung des Polgehäuses.

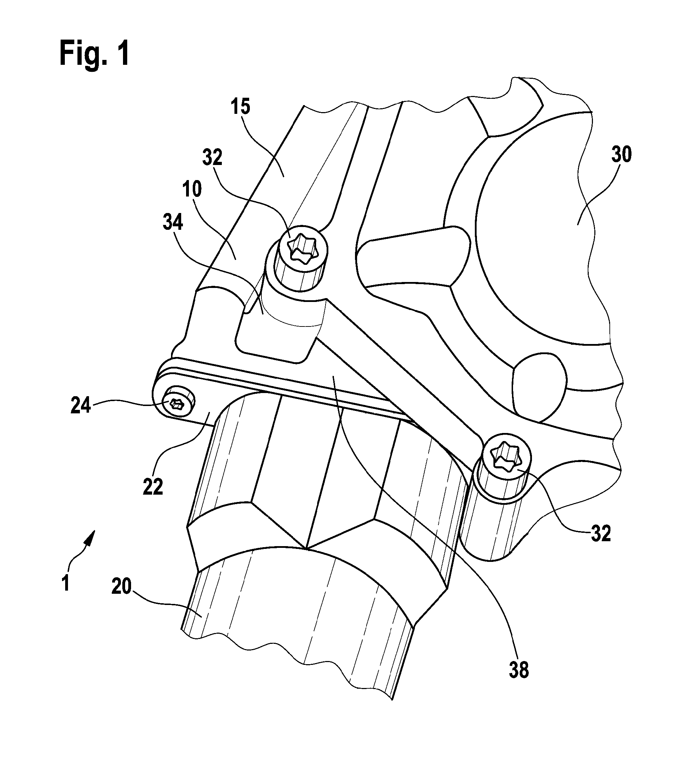

Fig. 1 zeigt eine Motorgetriebeanordnung 1, die ein Getriebegehäuse 10 aufweist, in dem ein Getriebe angeordnet ist.

### Beschreibung der Ausführungsbeispiele

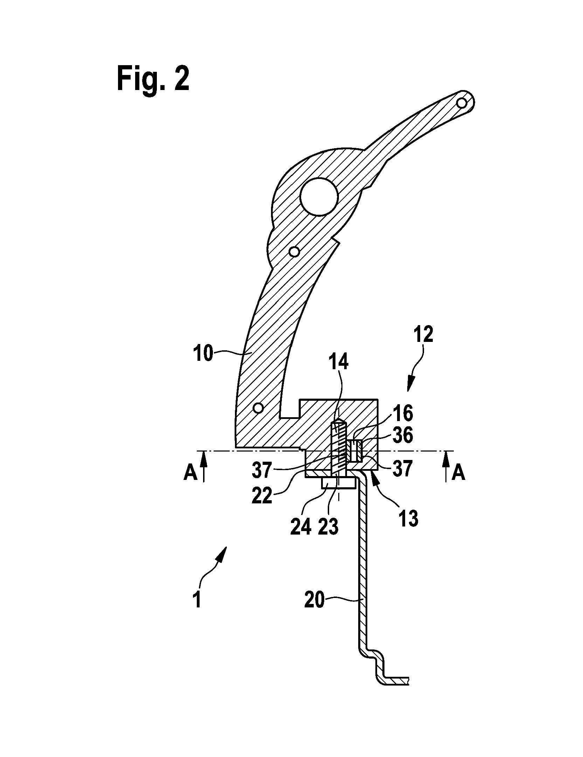

Das Getriebegehäuse 10 umfasst an einer ersten Seitenfläche 13 eine erste Öffnung 12 (siehe Fig. 2), durch die sich eine Motorwelle erstreckt, die ein sich in dem Getriebegehäuse befindliches Getriebe antreiben kann.

Ferner umfasst das Getriebegehäuse an einer zweiten Seitenfläche 15 eine zweite Öffnung (nicht gezeigt), die durch einen Getriebedeckel 30 verschlossen ist. Die zweite Seitenfläche 15 steht im Wesentlichen senkrecht zur ersten Seitenfläche 13. Die zweite Öffnung ermöglicht einen Zugang zu dem sich in dem Getriebegehäuse 10 befindlichen Getriebe. Das Getriebegehäuse 10 ist nicht leitend und üblicherweise aus Plastik hergestellt. In einigen Ausführungsformen können in dem Getriebegehäuse 10 Leiterbahnen angeordnet sein, um Signale weiterzuleiten. Der Getriebedeckel 30 ist leitend, und beispielsweise aus einem Blech hergestellt. In Ausführungsformen wird der Getriebedeckel 30 elektrisch auf Masse gehalten. Der Getriebedeckel 30 wird durch eine Vielzahl von Schrauben 32 an dem Getriebegehäuse 10 befestigt.

Die Motorgetriebeanordnung 1 weist ferner einen Elektromotor auf, der das sich im Getriebegehäuse 10 befindliche Getriebe über eine Motorwelle antreibt. Der Motor umfasst ein Polgehäuse 20, in dem Spulen zum Antrieb die Motorwelle angeordnet sind. Das Polgehäuse 20 ist üblicherweise elektrisch leitend, insbesondere aus einem Metall, hergestellt. Ferner liegt das Polgehäuse 20 in Ausführungsformen elektrisch auf Masse. Das Polgehäuse 20 weist an seinem getriebeseitigen Ende flanschartige Zungen 22 auf, die jeweils eine Öffnung 23 aufweisen, durch die eine Schraube 24 oder ein anderes Befestigungsmittel hindurch gesteckt werden kann, um das Polgehäuse 20 an der ersten Seitenfläche 13 des Getriebegehäuses 10 zu befestigen. Beispielsweise kann das Polgehäuse auch an die erste Seitenfläche 13 des Getriebegehäuses 10 genietet oder beispielsweise mit einem Bolzen befestigt werden.

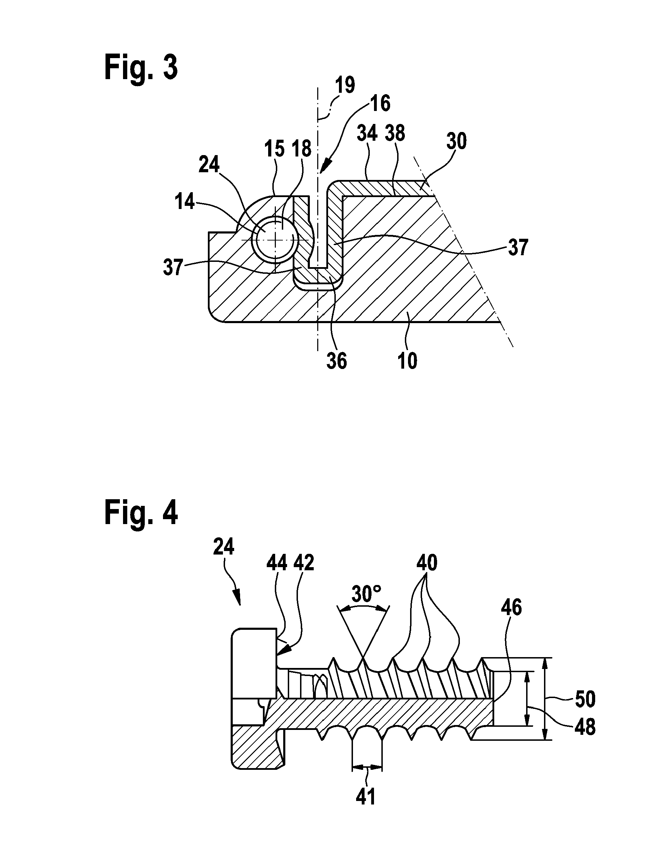

In Bezug auf Figuren 2 und 3, die jeweils einen Querschnitt durch die Motorgetriebeanordnung gemäß der in Fig. 1 gezeigten Ausführungsform darstellen, wird eine Herstellung einer elektrische Verbindung zwischen dem Polgehäuse 20 und dem Getriebedeckel 30 erläutert.

Das Getriebegehäuse weist mindestens eine erste Aussparung 14 in der ersten Seitenfläche 13 auf, die zur Aufnahme des Befestigungsmittels dient, mit dem das Polgehäuse 20 an der ersten Seitenfläche des Getriebegehäuses 10 befestigt wird. In der in den Figuren gezeigten Ausführungsform ist das Befestigungsmittel die Schraube 24. Die erste Aussparung 14 kann zylinderförmig und in der Form eines Sacklochs ausgeführt sein. Die erste Aussparung 14 weist eine Längsachse auf, die im Wesentlichen senkrecht zur ersten Seitenfläche 13 ist. Beispielsweise kann die Längsachse der ersten Aussparung 14 parallel zur Welle des sich im Polgehäuse 20 befindlichen Motors angeordnet sein.

Das Getriebegehäuse 10 weist ferner eine Tasche oder zweite Aussparung 16 in der zweiten Seitenfläche 15 auf. Die zweite Aussparung 16 in der Nähe der ersten Aussparung 14 angeordnet. Die zweite Aussparung 16 ist derart angrenzend an die erste Aussparung 14 angeordnet, dass die zweite Aussparung 16 mit der ersten Aussparung 14 über einen Verbindungsabschnitt 18 verbunden ist. Die zweite Aussparung 16 weist eine Achse 19 auf, die der Richtung entspricht, um einen Gegenstand in die zweite Aussparung 16 einzuführen. Die Achse 19 der zweiten Aussparung 16 ist im Wesentlichen senkrecht zur Längsachse der ersten Aussparung 14 angeordnet.

Der Verbindungsabschnitt 18 entspricht im Querschnitt senkrecht zur Längsachse der ersten Aussparung 14 5% bis 40 % des Umfangs, insbesondere 15 bis 35% des Umfangs. Die Länge des Verbindungsabschnitts kann variieren, ist so gewählt, dass ein niederohmiger Kontakt zwischen einem Befestigungsmittel, wie der Schraube 24 in der ersten Aussparung, und einem Metallteil in der zweiten Aussparung 16 ermöglicht werden kann. Im Fall einer Schraube kann die Länge des Verbindungsabschnitts in Richtung der Längsachse der ersten Aussparung eine Mehrzahl von Windungen des Gewindes der Schraube umfassen, beispielsweise 2 bis 5 Windungen.

Fig. 4 zeigt in der oberen Hälfte eine Draufsicht und in der unteren Hälfte einen Querschnitt einer Schraube 24 zur Befestigung des Polgehäuses 20. Die Schraube 24 weist eine Vielzahl von Windungen 40, die einen Abstand 41 von ungefähr 1mm bis 3mm, insbesondere 1,5 mm bis 2,5 mm, beispielsweise 1,8 mm, in Axialrichtung der Schraube 24 aufweisen. Ferner kann die Schulter 42 mindestens einen ringförmigen Vorsprung 44 aufweisen, um einen guten elektrischen Kontakt zwischen dem Polgehäuse und der Schraube 24 zu ermöglichen. Die Spitzen der Windungen 40 in radialer Richtung weisen im Querschnitt im Wesentlichen einen Winkel zwischen 20 Grad und 40 Grad auf, insbesondere zwischen 25 Grad und 35 Grad. In Fig. 4 ist beispielsweise ein Winkel von 30 Grad gezeigt. Ein Kern 46 der Schraube 24 kann beispielsweise einen Durchmesser 48 zwischen 1,5 mm und 4 mm aufweisen, insbesondere zwischen 2mm und 3mm, von dem sich die Windungen in radialer Richtung aus erstrecken. Dabei kann ein äußerer Durchmesser 50 der Windungen 40 beispielsweise zwischen 2,5 mm und 6 mm, insbesondere zwischen 3mm und 5mm, sein. Der Verbindungsabschnitt kann daher in Richtung der Längsachse der ersten Aussparung beispielsweise eine Länge von 2mm bis 15mm aufweisen, insbesondere zwischen 3mm und 10mm.

Der Getriebedeckel 30 weist eine Zunge 34 auf, die an ihrem Ende eine U-förmige Lasche 36 aufweist, deren Schenkel 37 senkrecht zu einer Auflageebene 38 der zweiten Seitenfläche 15 des Getriebegehäuses 10 angeordnet sind. Mit anderen Worten sind die Schenkel 37 parallel zur Achse 19 der zweiten Aussparung angeordnet.

Die U-förmige Lasche 36 wird bei Montage des Getriebedeckels 30 in die erste Aussparung 14 eingeführt, sodass zumindest ein Abschnitt der U-förmigen Lasche 36, beispielsweise einer der beiden Schenkel 37, an dem Verbindungsabschnitt 18 angeordnet ist. In einer Ausführungsform kann einer der beiden Schenkel der U-förmige Lasche 36 einen geraden Abschnitt aufweisen, der so am Verbindungsabschnitt angeordnet ist, dass der Schenkel wie eine Kreissehne die erste Aussparung 14, die insbesondere im Querschnitt kreisförmig ist, schneidet.

Wenn nunmehr die Schraube 24 zur Befestigung des Polgehäuses 20 in die erste Aussparung 14 gedreht wird, tritt sie in festen Kontakt mit einem der Schenkel 37 der U-förmigen Lasche 36. Dabei kann die Schraube einen Schenkel 37 der U-förmigen Lasche 36 verbiegen oder zumindest teilweise in den Schenkel 37 eingreifen, um einen guten elektrischen Kontakt zu ermöglichen. Beispielsweise kann eine selbstschneidende Schraube 24 verwendet werden. Somit ist eine elektrische Verbindung zwischen der Schraube 24 und dem Getriebedeckel 30 über die U-förmige Lasche 34 der Zunge 32 möglich. In einer Ausführungsform kann der an den Verbindungsabschnitt 18 angrenzende Schenkel der U-förmigen Lasche gegen den Verbindungsabschnitt 18 vorgespannt sein.

Die Schraube 24 kann ferner an ihrer Schulter oder ihrem Bund eine Verzahnung aufweisen, sodass auch ein guten elektrischen niederohmiger Kontakt zwischen der Schraube und dem Polgehäuse 20 ermöglicht wird. Folglich wird eine niederohmige Verbindung zwischen dem Getriebedeckel 30 und dem Polgehäuse 20 ermöglicht. Anstelle einer Verzahnung an der Schulter 26 der Schraube 24 kann auch eine Unterlegscheibe verwendet werden.

Somit wird eine elektrische Verbindung zwischen dem Kunststoffgetriebegehäuse durch die Verbindung von der Befestigungsschraube des Polgehäuses zum Blechgetriebedeckel ermöglicht. Die Befestigungsschraube kann eine bundseitige Verzahnung aufweisen, welche eine niederohmige elektrische Verbindung von Schraube zu Polgehäuse gewährleisten kann. Aus dem Getriebedeckel, kann eine U-förmige federnde Lasche ausgeformt werden. Die federnde Lasche greift in eine Tasche im Getriebegehäuse ein und stellt auf mehreren der Zahnflanken 40 der Befestigungsschraube einen elektrischen Kontakt sicher.

Beispielsweise kann die U-förmige Lasche 36 in Richtung der ersten Aussparung 16 vorgespannt sein. Zudem weißt der Verbindungsabschnitt 18 eine Länge in Längsrichtung der ersten Aussparung 14 auf, sodass mehrere Zahnflanken der zweiten Schraube 24 in Kontakt mit der U-förmigen Lasche 36 treten können.

In einer weiteren Ausführungsform können umgekehrt zu der in den Figuren 1 bis 3 dargestellten Ausführungsform die Anordnung eine Schraube 32 zur Befestigung des Getriebedeckels 30 mit einer U-förmigen Lasche des Polgehäuses 20 zusammenwirken, um eine niederohmige Verbindung zwischen dem Polgehäuse 20 und dem Getriebedeckel 30 bereitzustellen.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Getriebegehäuse zur Aufnahme eines Getriebes, an das ein elektrisch leitendes Polgehäuse eines Elektromotors anschließbar ist, wobei der Elektromotor eingerichtet ist, das Getriebe anzutreiben,
wobei das Getriebegehäuse eine erste Öffnung, um einer Welle des Elektromotors Zugang zu dem durch die Welle anzutreibenden Getriebe zu ermöglichen, und eine zweite Öffnung aufweist, die Zugang zu einem in dem Getriebegehäuse anordnenbaren Getriebe ermöglicht und die mit einem elektrisch leitenden Getriebedeckel verschließbar ist, wobei
das Getriebegehäuse mindestens eine erste Aussparung, durch die ein Befestigungsmittel zum Befestigen des Polgehäuses oder des Getriebedeckels an dem Getriebegehäuse einführbar ist, und mindestens eine zweite Aussparung aufweist, die jeweils mit mindestens einer ersten Aussparung abschnittsweise über einen Verbindungsabschnitt derart verbunden ist, so dass ein Abschnitt eines Getriebedeckels in Kontakt mit dem in der ersten Aussparung angeordneten Befestigungsmittel zum Befestigen des Polgehäuses oder ein Abschnitt eines Polgehäuses mit dem in der ersten Aussparung angeordneten Befestigungsmittel zum Befestigen des Getriebedeckels bringbar ist.

2. Getriebegehäuse nach Anspruch 1, wobei
die erste Aussparung auf der gleichen Gehäuseseite wie die erste Öffnung angeordnet ist und/oder die zweite Aussparung auf der gleichen Gehäuseseite wie die zweite Öffnung angeordnet ist.

3. Getriebegehäuse nach Anspruch 1 oder 2, wobei
die mindestens eine erste Aussparung eine Längsachse aufweist und im Querschnitt der ersten Aussparung der Verbindungsabschnitt 5% bis 40 % des Umfangs, insbesondere 15 bis 35% des Umfangs des ersten Abschnitts entspricht.

4. Getriebegehäuse nach einem der vorangehenden Ansprüche, wobei der Querschnitt der mindestens einen ersten Aussparung kreisförmig ist.

5. Getriebegehäuse nach einem der vorangehenden Ansprüche, wobei das Getriebegehäuse zumindest zwischen dem Abschnitt, an dem das Polgehäuse befestigt wird, und dem Abschnitt an dem der Getriebedeckel befestigt wird, insbesondere vollständig, elektrisch nicht leitend ist.

6. Motorgetriebeanordnung umfassend
ein Getriebegehäuse zur Aufnahme eines Getriebes, das durch den Elektromotor antreibbar ist, nach einem der vorangehenden Ansprüche,
ein, insbesondere elektrisch leitender, Getriebedeckel das die zweite Öffnung des Getriebegehäuses schließt, und
ein, insbesondere elektrisch leitendes, Polgehäuse eines Elektromotors, wobei das Polgehäuse an der ersten Öffnung befestigt ist.

7. Motorgetriebeanordnung nach Anspruch 6, wobei
mindestens ein Befestigungsmittel, insbesondere eine Schraube, ein Bolzen, eine Niete, derart in der mindestens einen ersten Aussparung zur Befestigung des Polgehäuses oder des Getriebedeckels angeordnet ist, dass ein elektrischer Kontakt zwischen dem Befestigungsmittel und dem Polgehäuse bzw. dem Getriebedeckel ermöglicht ist.

8. Motorgetriebeanordnung nach einem der Ansprüche 7 und 8, wobei der Getriebedeckel oder das Polgehäuse mindestens einen Abschnitt, insbesondere eine Lasche aufweist, der derart in die mindestens eine zweite Aussparung eingreift, dass der Abschnitt zumindest abschnittsweise den Verbindungsabschnitt abdeckt, so dass mindestens ein sich in der mindestens einen ersten Aussparung befindliches Befestigungsmittel in elektrischen Kontakt mit dem Abschnitt steht.

9. Motorgetriebeanordnung nach einem der Ansprüche 7 bis 9, wobei der Abschnitt in Richtung des Verbindungsabschnitts vorgespannt ist.

10. Scheibenwischerantrieb mit einer Motorgetriebeanordnung nach einem der Ansprüche 6 bis 9 und/oder einer Getriebeanordnung nach einem der Ansprüche 1 bis 5.
